# EUROPEAN PATENT SPECIFICATION

(11) **EP 1 908 381 B1**
(45) Date of publication and mention of the grant of the patent: **24.03.2010**
(21) Application number: 06021054.9
(22) Date of filing: 06.10.2006
(51) Int. Cl.: A47J 37/04, A47J 37/08

(54) **An automatic cooking device**
Automatische Kochvorrichtung
Dispositif de cuisson automatique

(43) Date of publication of application: 09.04.2008
(73) Proprietor: Volks Robot Taiwan Corp., Luzhu Shiang, Taoyuan County 338 Taiwan (CN)
(72) Inventor: Wang, Jeremy-Tsanyao, Taoyuan City Taoyuan County 330 Taiwan (CN)
(74) Representative: Negrini, Elena

(56) References cited:
- WO-A-03/096853
- CH-A- 451 443

## Description

### BACKGROUND OF THE INVENTION

### Field of Invention

The present invention relates an improved cooking device, particularly, the present invention relates an automatic cooking device for general purpose heating, cooking in a house, restaurants and the like.

### Description of the Related Art

The cooking devices with digital cooking programs control the cooking processes according to the food to be prepared become increasing popular in our daily life. Most of the prior art are designed to operate the cooking programs with only hot air or with only steam, or with a combination of hot air and steam at various temperatures and different time settings. However, the setting and use of such cooking devices requires special knowledge, particularly for cooking processes in which different cooking media are used for various periods of time at different temperatures. For most of people, those high-tech cooking devices are inconvenient and difficult to be operated.

Secondly, those cooking devices are not suitable to prepare food in the hot oil, such as stir-fry food, a common dish in the Chinese cuisine. As a matter of fact, the conventional cooking devices are restricted in its cooking programs in respect to certain type of food to be cooked, most of Asian cuisine cannot be prepared through hot air or steam, as a result, the conventional cooking devices cannot prepare various types of food.

Further, the setting of the cooking programs of those cooking devices known from the prior art is very time consuming, in particular if there are a number of such cooking devices in a large kitchen.

Moreover, most of the conventional computerized cooking devices are large in size, and special actuating elements, such as knobs and buttons, and displays are required for programming cooking processes.

The invention has been made to resolve above-mentioned problems, and its object is to provide a computerized cooking device in which can automatically control and cook various types of cuisine either through the hot air, steam or hot oil. The present invention provides an automatic cooking device that can cook food, such as stir-fry dish, with consistent and acute cooking parameters to provide consistent good taste and flavour of food without lengthy and complicate operations.

Document CH 451 443 A represents background art which can be regarded as useful to understand the invention.

### Summary of the Invention

It is an object of the present invention to provide an automatic cooking device, that is simple to use and cost effective yet imparts meals cooked therein with the taste and flavour of food cooked traditionally in the conventional cooking devices.

Another object of the present invention is to provide for an automatic cooking device which can be used to cook various meals and preparations conveniently without impairing in quality of taste and flavour of the meals.

A further object of the present invention is to provide for a cooking device which can be easily moved and transported.

The automatic cooking device of the present invention as defined in claim 1 comprises a fixed structure, a rotating body and a cooking vessel, wherein the fixed structure has at least one fixed bar, and the plurality of fixed bars can be arranged vertically or horizontally or at a slant angle. The rotating body has a first rotating device, a first device, a second rotating device and a third rotating device, wherein the rotating body is connected to the fixed structure to perform 3-dimensional movement. The cooking vessel is connected onto one side of the rotating body in which another side of the rotating body is connected to the fixed structure in such that the rotating body initiates the cooking vessel to operate the 3-dimensional movement. A first driving motor is provided at one end of the first rotating device connected to the fixed structure, and the first device is connected to one side of the first rotating device in which its opposite side of the first rotating device is connected to the fixed structure such that the first device is driven by the first driving motor to swing. The second rotating device is connected to one side of the first device to interact with the first device, and the third rotating device is positioned at one side of the second rotating device which is opposite to the connection side of the second rotating device and the first device in order to interact with the second rotating device.

Both the forgoing general description and the following detailed description are exemplary and explanatory only and are not restrictive of the invention, as claimed.

### Brief Description of the Drawings

The accompanying drawings are included to provide a further understanding of the present invention, and are incorporated in and constitute a part of this specification. The drawings illustrate embodiments of the present invention and, together with the description, serve to explain the principles of the invention. In the drawings,
Fig. 1 is an assembly view of an automatic cooking device in accordance with a prefer example of the present invention;
Fig. 2 is a 3 dimensional view of the assembled automatic cooking device in accordance with a preferred example of the present invention;
Fig. 3 is a front-view of the assembled automatic cooking device by showing how the assembled automatic cooking device can be operated in accordance with a preferred example of the present invention.

### Description of the Preferred Embodiments

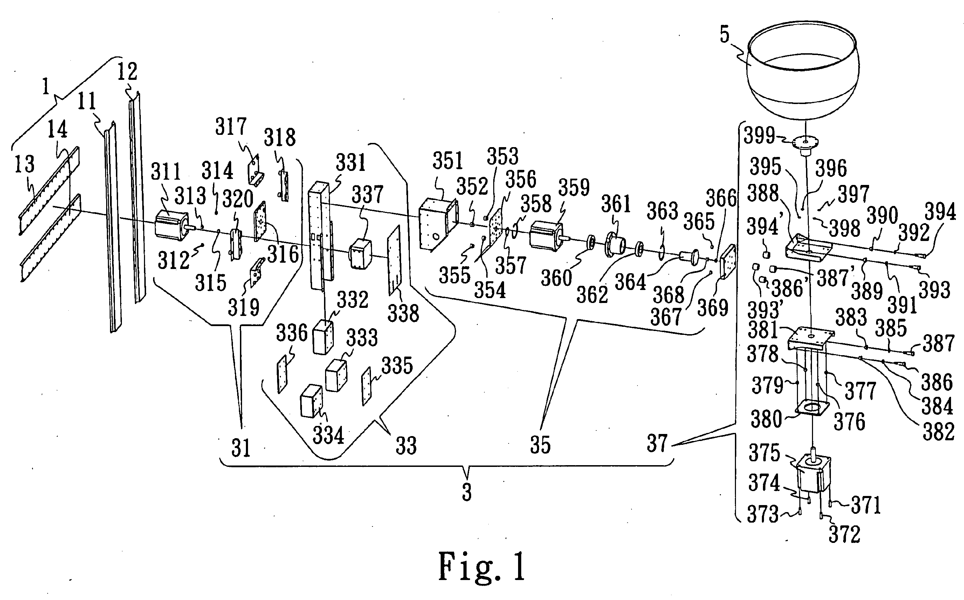

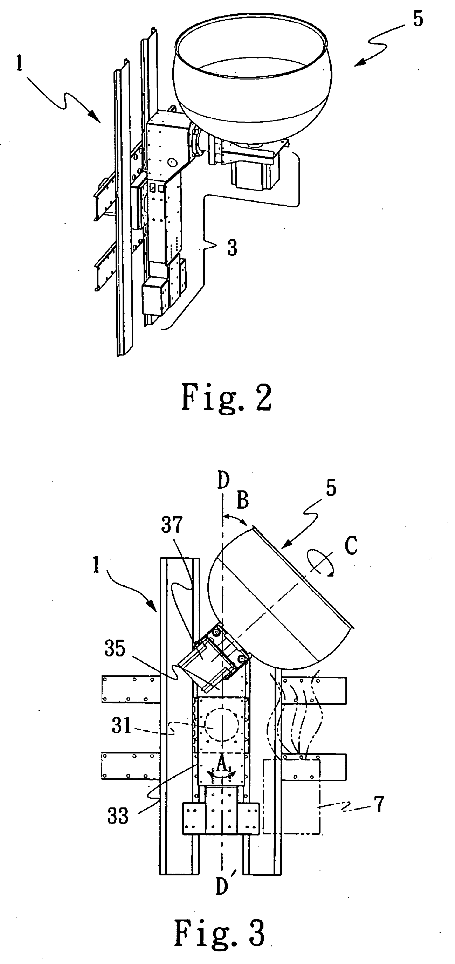

Fig. 1 illustrates an assembly view of an automatic cooking device in accordance with a prefer example of the present invention. The present invention provides an automatic cooking device with an embedded control for regulating cooking process, wherein the automatic cooking device comprises a fixed structure 1 with four fixed bars 11-14. In a preferred embodiment, the fixed bars, such as 11 and 12, are arranged vertically, and the fixed bars 13 and 14 can be arranged horizontally to the fixed bars 11 and 12 as shown in Figs 2 and 3, but other arrangements between the fixed bars 11-14 can be laid, such as the fixed bars 13 and 14 are arranged at a slant angle to the fixed bars 11 and 12, or perpendicularly to each other to form a square-shaped structure. Accordingly, the arrangements between the fixed bars 11-14 are not limited or restricted to the above-mentioned arrangements.

The automatic cooking device further comprises a rotating body 3 and a cooking vessel 5, wherein the rotating body 3 is utilized to integrate with the cooking vessel 5 with the fixed structure 1 by mounting the cooking vessel 5 onto a top portion of the rotating body 3 to perform 3-dimensional motion, the movement of the automatic device includes vibration, expanding and contracting motions, rotating, swinging or a combination of any two different motions. The rotating body 3 comprises a first rotating device 31 attaching onto the fixed structure 1, a first fixed device 33 and a second rotating device 35. The first rotating device 31 further comprises a first driving motor 311, a plurality of attaching rings 312, 313, 314 and 315, and a plurality of attaching plates, wherein the attaching plates include an attaching plate 316, an upper plate 317, a right plate 318, a bottom plate 319 and a left plate 320.

The first device 33 is connected to an opposite side to a connection between the first rotating device 31 and the fixed bars 11-14 of the fixed structure 1 in such that the first device 33 is driven by the first rotating device to rotate and vibrate. The first device 33 comprises a first connecting unit 331 and a plurality of fixed units, wherein the fixed units further divided into an upper fixed unit 332, a right fixed unit 333 and a left fixed unit 334. A plurality of fixed plates, such as a fixed plate 338, a front fixed plate 335 and a rear fixed plate 336, are provided to integrate with the fixed units 332-334, wherein an integrating unit 337, such as a gear shifting box, is provided to interact with the first driving motor 311. A second rotating device 35 is provided to integrate with the first device 33 and the first rotating device 31 on the fixed structure1, wherein the second rotating device 35 comprises a second connecting unit 351, a plurality of fixed units 352-355 such as screws, a plurality of fixed plates 356 and 369, an O-ring unit 357, and a plurality of connecting rings 358 and 363. A second driving motor 359, a plurality of bearings 360 and 362, a plurality of caps 361 and 364, and a plurality of fixed units such as screws 365-368 are also provided in the second rotating device 35.

A third rotating device 37 is utilized to position the cooking vessel 5 with the second rotating device 35 and the first device 33 such that the third rotating device 37 can move or rotate corresponding to the second rotating device 35. The third rotating device 37 comprises a plurality of fixed units, such as screws 371-374, 382,386-387, 389 and 393 -394, a third driving motor 375, a connecting plate 380, a plurality of screw caps 376-379,383, 389,390, 395-398, a plurality of connecting plates 381 and 388, a plurality of O-ring units 384, 385, 391 and 392, and a plurality of sleeves 386'. 387', 393', 394' and 399. The cooking vessel 5 is positioned on the third rotating device 37 in such that the cooking vessel is rotated corresponding to the movement of the combination between the second rotating device 35 and the first device 33.

Fig. 2 illustrates a 3-D view of the assembled automatic cooking device in accordance with a preferred example of the present invention. The cooking vessel 5 is integrated with the rotating body 3 and the fixed structure 1.

Fig. 3 shows a front-view to demonstrate how the assembled automatic cooking device can be operated in accordance with a preferred example of the present invention. Refer to Fig.3, once the ingredients are placed in the cooking vessel5, the first device 33 of the rotating body 3 rotates along a central axis D-D' of the automatic cooking device. In other words, the first device 33 of the rotating body 3 swings along a direction A in such that the second rotating device 35 of the rotating body 3 is interacted with the first rotating device 31 and the first device 33 to move along the direction A. The third rotating device 37 swings along a direction B as shown in Fig. 3 so that the third rotating device 37 of the rotating body 3 is interacted with the second rotating device 35. The cooking vessel 5 is then rotated in a rotation direction C in such that the ingredients within the cooking vessel can be mixed up and heated up or cooked up through a heater 7.

The automatic cooking device of the present invention is designed in such to manage complex cooking processes or food preparation, the food can be prepared either through hot oil, such as stir-fry, or hot air or steam. The automatic cooking device of the present invention utilizes a computerized cooking program to control and manage various temperatures and different cooking time settings for different types of food, therefore, the ingredients are properly controlled through the cooking program in order to provide consistent flavor and good quality taste of food. Further, the amount of the food to be prepared can be controlled actuarially through the automatic cooking device, thus it is simple to operate and control without requiring specific skill or knowledge. The automatic cooking device that is cost effective can be moved and transported easily form place to place. Thus, it can be operated by most of people without much difficulty.

Furthermore, the present invention can be utilized with computer program to regulate and control the cooking processes of the food, and store the data of the particular taste and flavor of every meal. In other words, the data base of the computerized program can record the information of specific meals with particular ingredients for particular customer, when the consumer go to one of food-chain restaurants utilizing the automatic cooking device, he or she still can get the specific flavor and taste of the meals no matter where she or he is.

Moreover, the automatic cooking device can be incorporated with computer and Internet service such that customers can order their favor food with exact quality of taste easily from their own homes.

Other embodiments of the invention will appear to those skilled in the art from consideration of the specification and practice of the invention disclosed herein. It is intended that the specification and examples to be considered as exemplary only, with a true scope of the invention being indicated by the following claims.

## Claims

1. An automatic cooking device, comprising
a fixed structure (1), having at least one fixed bar (11-14), wherein the plurality of fixed bars can be arranged vertically or horizontally or at a slant angle,
a rotating body (3), having a first rotating device (31), a first device, a second rotating device (35) and a third rotating device (37), wherein the rotating body (3) is connected to the fixed structure (1) to perform 3-dimensional movement; and
a cooking vessel (5), connecting onto one side of the rotating body (3) in which another side of the rotating body (3) is connected to the fixed structure (1) in such that the rotating body (3) initiates the cooking vessel (5) to operate the 3-dimensional movement, wherein a first driving motor (311) is provided at one end of the first rotating device (31) connected to the fixed structure (1), the first device (33) is connected to one side of the first rotating device (31) in which its opposite side of the first rotating device (31) is connected to the fixed structure (1) such that the first device (33) is driven by the first driving motor (311) to swing, the second rotating device (35) is connected to one side of the first device (33) to interact with the first device (33), the third rotating device (37) is positioned at one side of the second rotating device (35) which is opposite to the connection side of the second rotating device (35) and the first device (33) in order to interact with the second rotating device (35).

2. The automatic cooking device of claim 1, wherein the first rotating device (31) further comprises a plurality of attaching rings (312 - 315) and a plurality of attaching plates (316 - 320).

3. The automatic cooking device of claim 1, wherein a first connecting unit (331), at least one integrating unit (337), a plurality of fixed units (332 - 334) and fixed plates (338, 335, 336).

4. The automatic cooking device of claim 1, wherein the second rotating device (35) further comprises a second connecting unit (351), a plurality of fixed units (352 - 355), such as screws, a plurality of fixed plates (356, 369), at least one O-ring unit (357), and a plurality of connecting rings (358)., a second driving motor (359), a plurality of bearings (360, 362), a plurality of caps (361, 364), and a plurality of fixed units, such as screws (365 - 368).

5. The automatic cooking device of claim1, wherein the third rotating device (37) comprises a plurality of fixed units, such as screws (371-374, 382, 386-387), a third driving motor (375), at least one connecting plate (380), a plurality of screw caps (376-379, 383, 389, 390, 395-398), a plurality of connecting plates (381, 388), a plurality of O-ring units (384, 385, 391, 392), and a plurality of sleeves (386', 387', 393', 394', 399).

6. The automatic cooking device of claim 1, wherein the 3-dimensional movement can include rotation, vibration, expanding and contracting motions, swinging or any one of those motions.

7. The automatic cooking device of claim 1, wherein the 3-dimensional movement includes rotation, vibration, expanding and contracting motions, swinging or any two of these motions.

8. The automatic cooking device of claim1, wherein the 3-dimensional movement includes rotation, vibration, expanding and contracting motions, swinging or a combination of any two of these motions simultaneously.

## Patentansprüche

1. Eine automatische Kochvorrichtung, umfassend
eine befestigte Struktur (1) mit mindestens einem befestigten Balken (11 - 14), während die Mehrzahl der befestigten Balken vertikal oder horizontal oder in einem schrägen Winkel angeordnet werden kann,
einen Drehkörper (3), der eine erste Drehvorrichtung (31), eine erste Vorrichtung, eine zweite Drehvorrichtung (35) und eine dritte Drehvorrichtung (37) aufweist, während der Drehkörper (3) mit der befestigten Struktur (1) verbunden ist, um eine dreidimensionale Bewegung auszuführen, sowie
ein Kochgefäß (5), das auf einer Seite mit dem Drehkörper (3) verbunden ist, während eine andere Seite des Drehkörpers (3) mit der befestigten Struktur (1) so verbunden ist, dass der Drehkörper (3) einen Betrieb des Kochgefäßes (5) mit der dreidimensionalen Bewegung veranlasst, während ein erster Antriebsmotor (311) bereitgestellt ist an einem Ende der ersten Drehvorrichtung (31), die mit der befestigten Struktur (1) verbunden ist, die erste Vorrichtung (33) ist mit einer Seite der ersten Drehvorrichtung (31) verbunden, während die entgegengesetzte Seite der ersten Drehvorrichtung (31) mit der befestigten Struktur (1) verbunden ist, so dass die erste Vorrichtung (33) durch den ersten Antriebsmotor (311) zum Schwingen angetrieben wird, die zweite Drehvorrichtung (3 5) ist mit einer Seite der ersten Vorrichtung (33) verbunden, um mit der ersten Vorrichtung (33) zu interagieren, während die dritte Vorrichtung (37) an einer Seite der zweiten Drehvorrichtung (35) angeordnet ist, die entgegengesetzt der Verbindungsseite der zweiten Drehvorrichtung (35) mit der ersten Vorrichtung (33) ist, um mit der zweiten Drehvorrichtung (35) zu interagieren.

2. Die automatische Kochvorrichtung gemäß Anspruch 1, in der die erste Drehvorrichtung (31) weiterhin eine Mehrzahl an Befestigungsringen (312 - 315) und eine Mehrzahl an Befestigungsplatten (316 - 320) aufweist.

3. Die automatische Kochvorrichtung gemäß Anspruch 1, in der eine erste Verbindungseinheit (331), mindestens eine integrierende Einheit (337), eine Mehrzahl an befestigten Einheiten (332 - 334) sowie befestigten Platten (338, 335, 336) vorhanden ist.

4. Die automatische Kochvorrichtung gemäß Anspruch 1, in der die zweite Drehvorrichtung (35) weiterhin eine zweite Verbindungseinheit (351) aufweist, eine Mehrzahl befestigter Einheiten (352 - 355), wie beispielsweise Schrauben, eine Mehrzahl befestigter Platten (356, 369), mindestens eine O-Ringeinheit (357) und eine Mehrzahl an Verbindungsringen (358), einen zweiten Antriebsmotor (359), eine Mehrzahl an Lagern (360, 362), eine Mehrzahl an Kappen (361, 364) und eine Mehrzahl an befestigten Einheiten, wie beispielsweise Schrauben (365 - 368).

5. Die automatische Kochvorrichtung gemäß Anspruch 1, in der die dritte Drehvorrichtung (37) eine Mehrzahl befestigter Einheiten umfasst, wie beispielsweise Schrauben (371-374, 382, 386 - 387), einen dritten Antriebsmotor (375), mindestens eine Verbindungsplatte (380), eine Mehrzahl an Schraubenkappen (376 - 379, 383, 389, 390, 395 - 398), eine Mehrzahl an Verbindungsplatten (381, 388), eine Mehrzahl an O-Ringeinheiten (384, 385, 391, 392) sowie eine Mehrzahl an Muffen (386', 387', 393 394', 399).

6. Die automatische Kochvorrichtung gemäß Anspruch 1, in der die dreidimensionale Bewegung umfassen kann: Rotation, Vibration, Ausstreck- und Zusammenziehbewegungen, Schwingen oder irgendeine dieser Bewegungen.

7. Die automatische Kochvorrichtung gemäß Anspruch 1, in der die dreidimensionale Bewegung umfasst: Rotation, Vibration, Ausstreck- und Zusammenziehbewegungen, Schwingen oder irgendwelche zwei dieser Bewegungen.

8. Die automatische Kochvorrichtung gemäß Anspruch 1, in der die dreidimensionale Bewegung umfasst: Rotation, Vibration, Ausstreck- und Zusammenziehbewegungen, Schwingen oder eine Kombination von irgendwelchen zweien dieser Bewegungen gleichzeitig.

## Revendications

1. Dispositif de cuisson automatique, comprenant :
une structure fixe (1), ayant au moins une barre fixe (11-14), dans lequel la pluralité de barres fixes peuvent être agencées verticalement ou horizontalement ou à un angle d'inclinaison,
un corps rotatif (3), ayant un premier dispositif rotatif (31), un premier dispositif, un deuxième dispositif rotatif (35) et un troisième dispositif rotatif (37), dans lequel le corps rotatif (3) est connecté à la structure fixe (1) pour effectuer un mouvement tridimensionnel ; et
un récipient de cuisson (5), se connectant à un côté du corps rotatif (3) dans lequel un autre côté du corps rotatif (3) est connecté à la structure fixe (1) de sorte que le corps rotatif (3) amène le récipient de cuisson (5) à actionner le mouvement tridimensionnel, dans lequel un premier moteur d'entraînement (311) est fourni à une extrémité du premier dispositif rotatif (31) connecté à la structure fixe (1), le premier dispositif (33) est connecté à un côté du premier dispositif rotatif (31) dans lequel son côté opposé du premier dispositif rotatif (31) est connecté à la structure fixe (1) de sorte que le premier dispositif (33) soit entraîné par le premier moteur d'entraînement (311) pour osciller, le deuxième dispositif rotatif (35) est connecté à un côté du premier dispositif (33) pour interagir avec le premier dispositif (33), le troisième dispositif rotatif (37) est positionné à un côté du deuxième dispositif rotatif (35) qui est opposé au côté de connexion du deuxième dispositif rotatif (35) et du premier dispositif (33) pour interagir avec le deuxième dispositif rotatif (35).

2. Dispositif de cuisson automatique selon la revendication 1, dans lequel le premier dispositif rotatif (31) comprend en outre une pluralité d'anneaux d'attachement (312-315) et une pluralité de plaques d'attachement (316-320).

3. Dispositif de cuisson automatique selon la revendication 1, comprenant une première unité de connexion (331), au moins une unité d'intégration (337), et une pluralité d'unités fixes (332-334) et de plaques fixes (338, 335, 336).

4. Dispositif de cuisson automatique selon la revendication 1, dans lequel le deuxième dispositif rotatif (35) comprend en outre une deuxième unité de connexion (351), une pluralité d'unités fixes (352-355), comme des vis, une pluralité de plaques fixes (356, 369), au moins une unité de joint torique (357), et une pluralité d'anneaux de connexion (358), un deuxième moteur d'entraînement (359), une pluralité de paliers (360, 362), une pluralité de capuchons (361, 364), et une pluralité d'unités fixes, comme des vis (365-368).

5. Dispositif de cuisson automatique selon la revendication 1, dans lequel le troisième dispositif rotatif (37) comprend une pluralité d'unités fixes, comme des vis (371-374, 382, 386-387), un troisième moteur d'entraînement (375), au moins une plaque de connexion (380), une pluralité de capuchons de vis (376-379, 383, 389, 390, 395-398), une pluralité de plaques de connexion (381, 388), une pluralité d'unités de joints toriques (384, 385, 391, 392) et une pluralité de douilles (386', 387', 393', 394' 399).

6. Dispositif de cuisson automatique selon la revendication 1, dans lequel le mouvement tridimensionnel peut comprendre une rotation, une vibration, des mouvements d'expansion et de contraction, une oscillation ou l'un quelconque de ces mouvements.

7. Dispositif de cuisson automatique selon la revendication 1, dans lequel le mouvement tridimensionnel comprend une rotation, une vibration, des mouvements d'expansion et de contraction, une oscillation ou deux quelconques de ces mouvements.

8. Dispositif de cuisson automatique selon la revendication 1, dans lequel le mouvement tridimensionnel comprend une rotation, une vibration, des mouvements d'expansion et de contraction, une oscillation ou une combinaison de deux quelconques de ces mouvements simultanément.
